# EUROPEAN PATENT SPECIFICATION

(11) **EP 2 754 603 B1**
(45) Date of publication and mention of the grant of the patent: **19.07.2017**
(21) Application number: 13150868.1
(22) Date of filing: 10.01.2013
(51) Int. Cl.: B62D 25/04, B62D 29/00, B62D 65/02, C21D 9/00

(54) **Method, vehicle reinforcement & vehicle**
Verfahren, Fahrzeugverstärkung und Fahrzeug
Procédé, renforcement de véhicule et véhicule

(43) Date of publication of application: 16.07.2014
(73) Proprietor: Volvo Car Corporation, 40 531 Göteborg (SE)
(72) Inventor: Elfwing, Jens, 42336 Torslanda (SE); Wehrend, Michael, 41653 Göteborg (SE); Trana, Kristoffer, 29154 Kristianstad (SE); Nedemo, Johan, 29633 Åhus (SE)
(74) Representative: Volvo Car Corporation

(56) References cited:
- EP-A2- 0 816 520
- WO-A1-97/30882
- WO-A1-2006/050688
- CN-A- 102 162 574
- DE-A1- 2 452 486
- DE-A1-102009 040 935
- DE-A1-102010 041 863
- DE-U1-202009 002 575
- US-A1- 2010 117 400
- US-A1- 2012 304 448

## Description

### TECHNICAL FIELD

The present invention concerns a method for manufacturing a vehicle reinforcement and a vehicle reinforcement manufactured using such a method. The present invention also concerns a vehicle comprising at least one such vehicle reinforcement or vehicle pillar.

### BACKGROUND OF THE INVENTION

By law, all new car models must pass certain safety tests and certifying procedures in different countries or regions, such as side impact tests, for example pole side impact tests, before they are sold.

Several side impact structures for vehicles having improved side impact crash behaviour have been disclosed in the prior art. For example, US patent no. 6 524 404 discloses a B-pillar reinforcement, i.e. a pillar reinforcement that supports the roof of a vehicle and that is located between the front and rear side windows, having improved crash behaviour and which constitutes a longitudinal steel profile. The longitudinal profile has an upper part comprised of a martensitic material structure and a strength of more than 1400 N/mm² and has a lower part of higher ductility (or so called "soft zone") with a predominantly ferritic-perlitic material structure and a strength of below 850 N/mm².

The B-pillar reinforcement is manufactured in a warm form process, starting with a form blank or a pre-formed longitudinal profile which is subjected to a heat treatment in a furnace yielding an austenitic material structure and, subsequently, it is reformed/hardened to a martensitic material structure in a cooled tool or equipment. Large areas of the blank or, respectively, the pre-formed longitudinal profile can be isolated or protected in the furnace against temperature effects. Thus, these areas are not subjected to a significant heating, such that the temperature increase overall in these areas is markedly below the temperature causing an austenitic material structure. It follows that there can be achieved, in the cooled tool or equipment, an absence of martensitic material structure with high strength in the areas not subjected to significant heating.

US 2010/117400 concerns a composite that includes, but is not limited to a first steel plate, which is welded via a weld seam to a second steel plate, in which the two steel plates and the weld seam bonding them are hardened and the composite has a broadening in the area of the weld seam. Furthermore, a B-column is provided for a motor vehicle body that includes, but is not limited to a reinforcement B-column, the reinforcement B-column including, but not limited to a first steel plate, which is welded via a weld seam to a second steel plate, and the two steel plates include, but are not limited to a heat-treated steel and are hardened like the weld seam bonding them, and the reinforcement B-column has a broadening in the area of the weld seam.

WO 97/30882 discloses a private car body with front part, rear part, floor pan and body sides and roof part. The body consists of a body lower part and a body superstructure with a beam structure welded fast on top of it. This beam structure consists of thin-walled, flange-free profile parts with closed cross sections made by means of roll-forming and welded together to each other. The component parts of the beam structure are hardened so that the material, which is boron steel or similar high tensile steel capable of being hardened, in the constituent profile parts has a yield limit of the order of 900-1100 N/mm². Hardening can take place before or after the welding-together of the profile parts to the beam structure. The body superstructure can be made as a complete unit with roof panels, windows, inner trim etc. before it is mounted on the body lower part.

DE 20 2009 002575 concerns a profile part as a body component of a motor vehicle, which is divided into at least two areas, of which the first portion has a ferritic or pearlitic-ferritic structure with a tensile strength of 850 MPa, and the second portion comprises a martensitic material structure with a strength over 1400 MPa. The two regions are divided along a vertical and/or inclined dividing plane.

DE 10 2010 041 863 describes a car that has a metal sheet component made of sheet steel, and connected with an amplification component by welding points, where the amplification component exhibits ductility smaller than that of the sheet component. The sheet component is stressed with the amplification component during an accident by pulling process. The amplification component has a shaft between the welding points, where the shaft runs in a longitudinal extension vertically or diagonally to a direction of tensile stress during accident. The amplification component is made of manganese boron steel.

DE 24 52 486 discloses a method of manufacturing a hardened steel article, in which a blank of hardenable steel is heated to hardening temperature and thereafter placed in a forming apparatus in which the blank is formed to the desired final shape by being subjected to substantial deformation and simultaneous rapid cooling, such that a martensitic and/or bainitic structure is obtained while the blank remains in the forming apparatus, which serves as a gauge for preventing distortion of the blank.

DE 10 2009 040 935 describes a method that involves assembling individual components to a semi-finished product. The semi-finished product is hot-deformed, and the individual components are connected together by a section by a thermal material-fit joining process or by laser welding, spot welding and/or gluing. The semi-finished product is quenched by a cooling medium. The section is heated at austenitizing temperature and is bent in a longitudinal direction during a heat condition. A hollow space of the semi-finished product is closed after deformation of the product in the longitudinal direction. An independent claim is also included for a body component for a motor vehicle.

CN 102 162 574 relates to an ultrahigh-strength steel laser tailor welded blank and a forming process thereof. The forming process comprises the following steps: carrying out the laser tailor welding on ultrahigh-strength steel and high-strength steel according to the needed shape; then, delivering the obtained welded blank to a furnace filled with a protective gas and heating to 920-940°C to be continued for at least 5 minutes; fully austenitizing; transferring the austenitized welded blank to a press machine to be rapidly molded and formed; cooling to 100-150°C through pressurization quenching; and cooling along room temperature to obtain the needed parts.

WO 2006/050688 concerns a method for the production of components, in particular, for application in vehicles, whereby at least one sheet, made from a boron-alloy tempered or hardened steel, is joined to at least one sheet of roughly the same material quality or another steel material and the material composite is subjected to a forming process. At least the boron-alloy sheet is hot-formed and subjected to an in situ press quenching with closed moulding tool halves.

US 2012/304448 discloses a process for producing sheet steel components having regions of differing ductility, in which either a sheet metal plate composed of a hardenable steel alloy is used to produce a component by deep-drawing and the deep-drawn component is then at least partially austenitized by a heat treatment and subsequently quench hardened in a die or the plate is at least partially austenitized by a heat treatment and shaped in the hot state, and is quench hardened during or after this, with the sheet metal plate having a zinc-based cathodic corrosion protection coating, whereby in regions of a desired higher ductility of the component, at least one additional sheet is attached to the plate, situated so that during the heat treatment, the plate is heated to a lesser degree there than in the remaining region.

### SUMMARY OF THE INVENTION

An object of the invention is to provide an improved method for manufacturing a vehicle-reinforcement.

This object is achieved by a method comprising the steps of a) joining a first portion comprising boron steel to a second portion comprising more ductile material than boron steel to form a vehicle reinforcement, and then b) heat treating at least one part of the first portion after the joining so that the vehicle reinforcement comprises at least one hardened zone of boron steel (i.e. the at least one heat treated part of the first portion), and one or more non-heat treated parts of boron steel in said first portion, and at least one soft zone of more ductile material than boron steel (i.e. the second portion and any non-heat treated part(s) of the first portion). The first portion comprises (or is made of) boron steel which responds to heat treatment in order to create a martensitic structure after the heat treatment. The second portion comprises (or is made of) a material that does not respond to the heat treatment like boron steel but remains ductile.

Since boron steel is used in only the first part of the vehicle reinforcement, substantial material costs may be made using such a manufacturing method. Furthermore, since the soft zone, i.e. a zone comprising material that is more deformable and ductile than the boron steel to which it is joined, is located next to a joint, such as a weld joint, this will reduce or eliminate the risk of the vehicle reinforcement cracking in and/or around the joint in the event of a collision, resulting in improved crash behaviour. In the event of a side impact collision the side impact structure according to the present invention will not crack, or it will be substantially less likely to crack in the region(s) of the at least one soft zone due to the increased ductility in said region(s) and will therefore improve the vehicle's ability to survive the side impact without suffering passenger compartment intrusion. A vehicle reinforcement, such as a vehicle pillar with such at least one soft zone located at the lower part thereof will furthermore improve the vehicle's ability to prevent passenger compartment intrusion in the event of a collision.

Additionally, a first portion comprising boron steel is stiffer and more lightweight than a component comprising normal steel on account of the alloys that have been added during manufacture, thereby making a vehicle comprising a vehicle reinforcement according to an embodiment of the present invention safer, lighter and more fuel-efficient than a vehicle having at least one vehicle reinforcement made of normal steel.

According to an embodiment of the invention the vehicle reinforcement constitutes one of: a vehicle pillar reinforcement, such as an A-, a B- or C-pillar reinforcement, a roof rail, a sill member.

According to another embodiment of the invention the first portion is an upper part of a vehicle pillar reinforcement and the second portion is a lower part of a vehicle pillar reinforcement when the vehicle pillar has been mounted in the vehicle.

According to another embodiment of the invention the at least one hardened zone is arranged to be located substantially in the upper half, the upper third or upper quarter of the vehicle pillar when it is mounted in a vehicle.

According to a further embodiment of the invention the first portion and/or the second portion comprises a tailor roller blank (TRB). A tailored rolled blank (TRB) (or "tailored blank") is a metal sheet, which is typically composed of various steel grades and thicknesses. This allows different parts of a vehicle reinforcement manufactured from the TRB to be adapted to local loads, which would otherwise require additional strengthening components. Benefits of using TRBs therefore include reducing component weight and manufacturing costs. Typically individual sheet metal plates are welded together by laser welding to produce a TRB.

According to an embodiment of the invention the second portion comprises a tailor welded blank (TWB). A tailor welded blank is a single component typically composed of various steel grades and thicknesses, joined at a factory usually by a laser weld.

According to another embodiment of the invention the first portion has a non-uniform thickness.

The present invention also concerns a vehicle reinforcement manufactured using a method according to an embodiment of the invention. The vehicle reinforcement has a first portion and a second portion. The first portion comprises boron steel, and the second portion comprises more ductile material than boron steel. The first portion and the second portion are joined together, by a weld joint for example, whereby at least one part of the first portion has been heat treated after it has been joined to the second portion so that it comprises at least one hardened zone of boron steel and one or more non-heat treated parts of boron steel in said first portion, and at least one soft zone of more ductile material than boron steel.

According to an embodiment of the invention the vehicle reinforcement constitutes one of: a vehicle pillar reinforcement, such as an A-, a B- or C-pillar reinforcement, a roof rail, a sill member.

According to another embodiment of the invention the first portion is an upper part of a vehicle pillar and the second portion is a lower part of a vehicle pillar.

According to a further embodiment of the invention the first portion and/or the second portion comprises a tailor roller blank (TRB).

According to an embodiment of the invention the second portion comprises a tailor welded blank (TWB).

According to another embodiment of the invention the first portion has a non-uniform thickness.

The present invention also concerns a vehicle comprising at least one vehicle reinforcement according to any of the embodiments of the invention.

### BRIEF DESCRIPTION OF THE DRAWINGS

The present invention will hereinafter be further explained by means of non-limiting examples with reference to the appended schematic figures where;
- Figure 1: shows a vehicle according to an embodiment of the invention,
- Figure 2: shows a vehicle body comprising at least one vehicle reinforcement according to an embodiment of the invention,
- Figure 3: shows a vehicle reinforcement blank before heat treatment,
- Figure 4: shows a finished vehicle reinforcement according to an embodiment of the invention, and
- Figure 5: is a flow diagram showing the steps of a method according to an embodiment of the invention.

It should be noted that the drawings have not been drawn to scale and that the dimensions of certain features have been exaggerated for the sake of clarity.

### DETAILED DESCRIPTION OF EMBODIMENTS

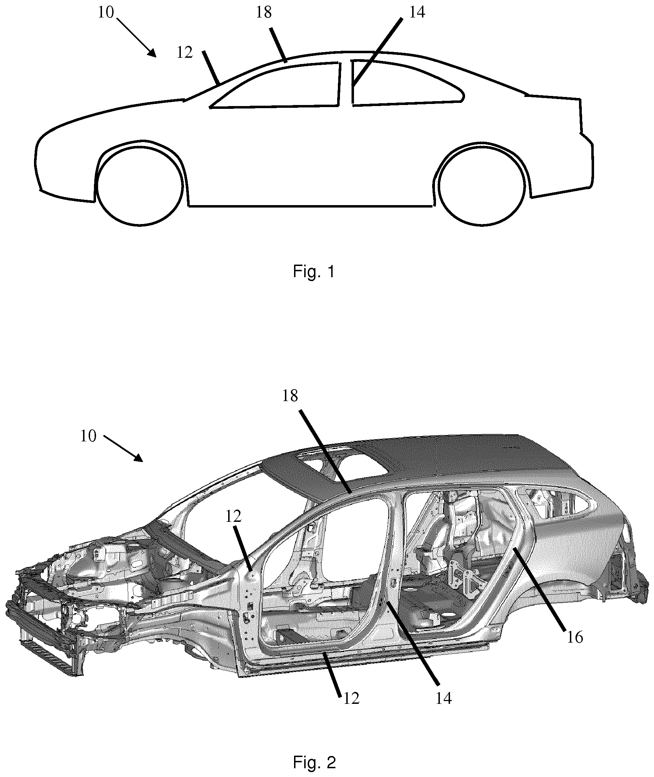

Figures 1 and 2 show a vehicle 10 and vehicle body 22 comprising at least one vehicle reinforcement 12, 14, 16, 18, 20 according to an embodiment of the invention. The vehicle reinforcement can be a vehicle pillar reinforcement such as an A-pillar reinforcement 12, a B-pillar reinforcement 14 or a C-pillar reinforcement 16 etc., a roof rail 18 or a sill member 20.

An A-pillar reinforcement 12 is a structural support on a side of a vehicle's windscreen located just ahead of and above the vehicle's front doors, i.e. a structural component that extends between a sill member 20 and a roof member 18 of the vehicle. An "A-pillar" reinforcement according to the present invention may extend up to the point where the A-pillar reinforcement 12 meets the B-pillar reinforcement 14, or it may include a structural component that forms a continuation of the A-pillar reinforcement 12 that extends above the doors of the vehicle 10 along the roof of the vehicle beyond the B-pillar reinforcement 14. The A-pillar reinforcement 12 and C-pillar reinforcement 16 according to an embodiment of the invention together may form the roof rail 18 of a vehicle 10. Alternatively, a roof rail 18 may be provided between vehicle pillar reinforcements (between the A-pillar reinforcement 12 and the B-pillar reinforcement 14 and/or between the B-pillar reinforcement 14 and the C-pillar reinforcement etc.).

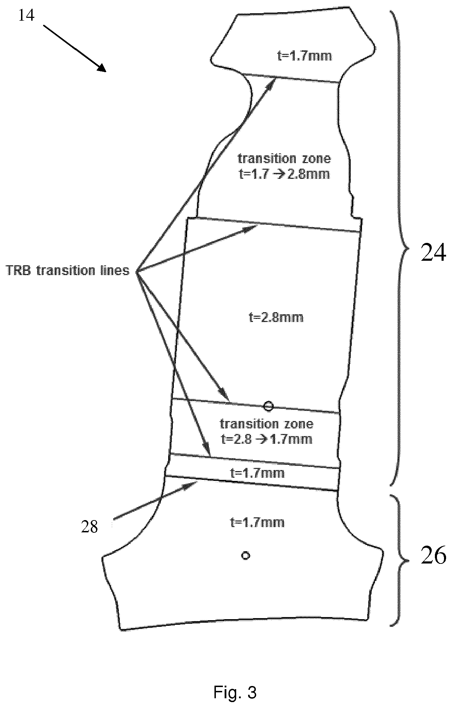

Figure 3 shows a vehicle reinforcement blank, namely a B-pillar reinforcement blank 14, prior to being subjected to a heat treatment, such as hot forming. The B-pillar reinforcement blank 14 is manufactured by a) joining a first (upper) portion 24 comprising boron steel, which constitutes the upper part of the B-pillar reinforcement 14, to a second (lower) portion 26 comprising more ductile material than boron steel, which constitutes the lower part of the B-pillar reinforcement 14.

The B-pillar reinforcement blank 14 illustrated in figure 3 comprises a joint 28, namely a weld seam, between the first portion 24 and the second portion 26. TRB transition lines between a plurality of zones of the first portion 24 having different thicknesses, t are also shown in figure 3. In the illustrated embodiment the second portion 26 has a uniform thickness between 1.0-2.0 mm, such as 1.7 mm. The B-pillar reinforcement blank 14 may be arranged to have a uniform thickness in the vicinity of the weld seam 28, i.e. within 50 mm of a joint. The first portion 24 may have a non-uniform thickness in a zone above this region of uniform thickness (for example a transition zone having a variable thickness of 1.7-2.8 mm). The first portion 24 and the second portion 26 may however comprises portions of any suitable uniform or non-uniform thickness.

At least one part of the B-pillar reinforcement blank 14 shown in figure 3 may be b) heat treated after the joining of its constituent portions 24, 26 so that the finished B-pillar reinforcement 14 comprises at least one hardened zone of boron steel and one or more non-heat treated parts of boron steel in the upper part 24 thereof, and at least one soft zone of more ductile material than boron steel in the lower part 26 thereof.

Any known manufacturing method, such as hot forming, may be used to produce a vehicle reinforcement 12, 14, 16, 18, 20 according to the present invention. In hot forming a vehicle reinforcement 12, 14, 16, 18, 20 may be heated to austenitization temperature in a furnace and thereafter formed to the desired shape in a tool using a press for example. The tool may be cooled, by water for example, and when the press has finished its stroke (i.e. the forming) the press force may be increased so that the cooling (quenching) of the formed part quickly results in the formation of the desired martensitic structure in the vehicle reinforcement 12, 14, 16, 18, 20. The vehicle reinforcement contour and holes may be finish-trimmed thereafter, using a laser cutting process for example.

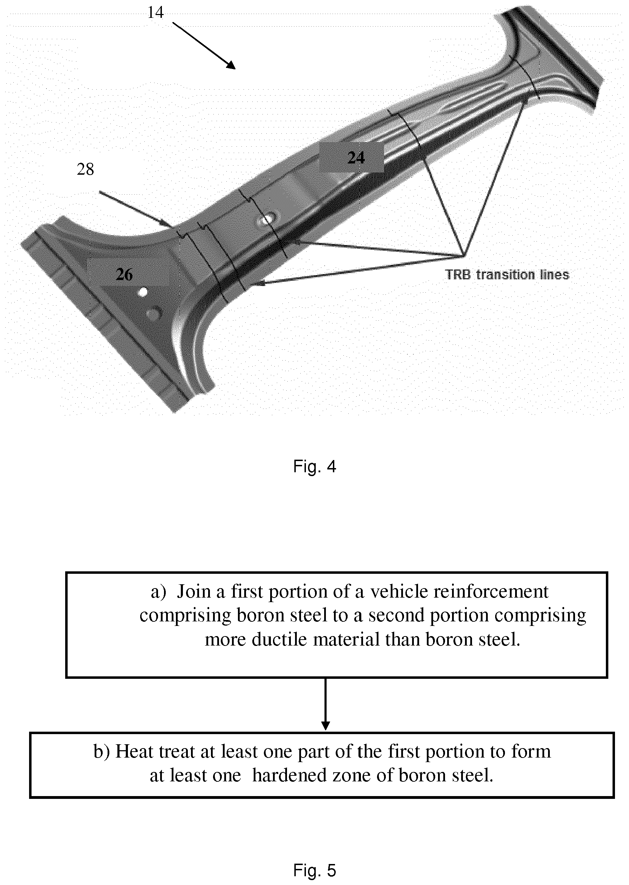

Figure 4 shows a finished B-pillar reinforcement 14 according to an embodiment of the present invention. A vehicle reinforcement according to the present invention will exhibit a joint, such as a weld seam, which may be visible, between a first portion 24 and a second portion 26 thereof. The first portion 24 and/or the second portion 26 may be of variable thickness. A hardness test, such as a Vicker's Hardness Test, and/or metallurgical structure analysis may be used to determine that the first portion 24 comprises boron steel having a hardened zone comprising martensitic material, and that the second portion 26 comprises at least one soft zone of more ductile material than boron steel.

According to an embodiment of the invention the material constituting the soft zone has a tensile strength of 800 MPA or lower or a Vicker's Hardness value of 350HV30 or less.

According to another embodiment of the invention the boron steel constituting at least one hardened zone comprises martensitic material, having a tensile strength of 1300 MPa or more.

According to an embodiment of the invention the at least one hardened zone is arranged to be located substantially in the upper half, the upper third or upper quarter of the vehicle pillar reinforcement 12, 14, 16 when it is mounted in a vehicle 10.

The first (upper) portion 24 may comprise a tailor roller blank (TRB) of non-uniform thickness and the second (lower) portion 26 may comprise a tailor welded blank (TWB).

The first portion 24 and/or the second portion 26 may have a uniform or non-uniform thickness varying between 0.8 to 2.5 mm for example, more preferably 1-1.5 mm.

It should be noted that a vehicle reinforcement 12, 14, 16, 18, 20 according to an embodiment of the present invention may comprise at least one additional portion comprising boron steel other than the first portion 24, which may be joined to the first and/or second portion 26 and then heat treated to form at least one hardened zone. The vehicle reinforcement 12, 14, 16, 18, 20 according to an embodiment of the present invention may also comprise at least one additional portion comprising more ductile material than boron steel which may be joined to the first portion 24 and/or second portion 26 to form at least one soft zone of more ductile material than boron steel.

Figure 5 shows a flow diagram showing the steps of a method according to the present invention. The method includes the steps of a) joining a first portion 24 comprising boron steel to a second portion 26 comprising more ductile material than boron steel to form a vehicle reinforcement 12, 14, 16, 18, 20, and then b) heat treating at least one part of the first portion 24 after the joining so that the vehicle reinforcement 12, 14, 16, 18, 20 comprises at least one hardened zone of boron steel (in the first portion 24 thereof) and at least one soft zone of more ductile material than boron steel (in the second portion 26 thereof and any non-heat treated part(s) of the first portion 24). A vehicle pillar reinforcement 12, 14, 16 manufactured using such a method may then be mounted in a vehicle with the at least one hardened zone of boron steel located in the upper half thereof.

It should be noted that a vehicle reinforcement 12, 14, 16, 18, 20 according to an embodiment of the present invention may be arranged to comprise at least one additional soft zone that solely promotes desired deformation behaviour of the vehicle reinforcement 12, 14, 16, 18, 20 in the event of a collision, which additional soft zone may for example be located in portions of the vehicle reinforcement 12, 14, 16, 18, 20 other than in the second portion 26, such as in the first portion 24 or in an additional portion thereof.

The first portion 24 and the second portion 26 may be joined by welding, such as by resistance spot welding, laser welding, arc welding or any other suitable joining method, such as adhesion.

Further modifications of the invention within the scope of the claims would be apparent to a skilled person.

## Claims

1. Method of manufacturing a vehicle reinforcement (12, 14, 16, 18, 20), which comprises the step of a) joining a first portion (24) comprising boron steel to a second portion (26) comprising more ductile material than boron steel to form a vehicle reinforcement (12, 14, 16, 18, 20), **characterized in that** it comprises the step of b) heat treating at least one part of said first portion (24) after said joining so that said vehicle reinforcement (12, 14, 16, 18, 20) comprises at least one hardened zone of boron steel and one or more non-heat treated parts of boron steel in said first portion (24), and at least one soft zone of more ductile material than boron steel.

2. Method according to any of the preceding claims, **characterized in that** said vehicle reinforcement constitutes one of: a vehicle pillar reinforcement, such as an A-pillar reinforcement (12), a B-pillar reinforcement (14) or a C-pillar reinforcement (16), a roof rail (18), a sill member (20).

3. Method according to claim 2, **characterized in that** said first portion (24) is an upper part of a vehicle pillar reinforcement (12, 14, 16) and said second portion (26) is a lower part of a vehicle pillar reinforcement (12, 14, 16).

4. Method according to claim 2, **characterized in that** said at least one hardened zone is arranged to be located substantially in the upper half, the upper third or upper quarter of the vehicle pillar reinforcement (12, 14, 16) when it is mounted in a vehicle (10).

5. Method according to any of the preceding claims, **characterized in that** said first portion (24) and/or said second portion (26) comprises a tailor roller blank (TRB).

6. Method according to any of the preceding claims, **characterized in that** said second portion (26) comprises a tailor welded blank (TWB).

7. Method according to any of the preceding claims, **characterized in that** said joining in step a) comprises joining said first portion (24) to said second portion (26).

8. Method according to any of the preceding claims, **characterized in that** said first portion (24) has a non-uniform thickness.

9. Vehicle reinforcement (12, 14, 16, 18, 20) having an first portion (24) and a second portion (26), whereby said first portion (24) comprises boron steel, and said second portion (26) comprises more ductile material than boron steel, whereby said first portion (24) and second portion (26) are connected by a joint, **characterized in that** at least one part of said first portion (24) has been heat treated after it has been joined to said second portion (26) so that said vehicle reinforcement (12, 14, 16, 18, 20) comprises at least one hardened zone of boron steel and one or more non-heat treated parts of boron steel in said first portion (24), and at least one soft zone of more ductile material than boron steel.

10. Vehicle reinforcement (12, 14, 16, 18, 20) according to claim 9, **characterized in that** said vehicle reinforcement constitutes one of: a vehicle pillar reinforcement, such as an A-pillar reinforcement (12), a B-pillar reinforcement (14) or a C-pillar reinforcement (16), a roof rail (18), a sill member (20).

11. Vehicle reinforcement (12, 14, 16, 18, 20) according to claim 10, **characterized in that** said first portion (24) is an upper part of a vehicle pillar reinforcement (12, 14, 16) and said second portion (26) is a lower part of a vehicle pillar reinforcement (12, 14, 16).

12. Vehicle reinforcement (12, 14, 16, 18, 20) according to claim 11, **characterized in that** said at least one hardened zone is arranged to be located substantially in the upper half, the upper third or upper quarter of the vehicle pillar reinforcement (12, 14, 16) when it is mounted in a vehicle (10).

13. Vehicle reinforcement (12, 14, 16, 18, 20) according to any of claims 9-12, **characterized in that** said first portion (24) and/or said second portion (26) comprises a tailor roller blank (TRB).

14. Vehicle reinforcement (12, 14, 16, 18, 20) according to any of claims 9-13, **characterized in that** said second portion (26) comprises a tailor welded blank (TWB).

15. Vehicle reinforcement (12, 14, 16, 18, 20) according to any of claims 9-14, **characterized in that** said first portion (24) is welded to said second portion (26).

16. Vehicle reinforcement (12, 14, 16, 18, 20) according to any of claims 9-15, **characterized in that** said first portion (24) has a non-uniform thickness.

17. Vehicle (10) comprising at least one vehicle reinforcement (12, 14, 16, 18, 20) according to any of claims 9-15.

## Patentansprüche

1. Verfahren zur Herstellung einer Fahrzeugverstärkung (12, 14, 16, 18, 20), das umfasst: den Schritt a) des Verbindens eines Borstahl umfassenden ersten Abschnitts (24) mit einem zweiten Abschnitt (26), der dehnbareres Material als Borstahl umfasst, um eine Fahrzeugverstärkung (12, 14, 16, 18, 20) zu bilden, **dadurch gekennzeichnet, dass** es umfasst: den Schritt b) einer Wärmebehandlung von mindestens einem Teil des ersten Abschnitts (24) nach dem Verbinden, so dass die Fahrzeugverstärkung (12, 14, 16, 18, 20) mindestens eine gehärtete Zone Borstahl und ein oder mehrere wärmeunbehandelte Teile Borstahl im ersten Abschnitt (24) sowie mindestens eine weiche Zone aus Material umfasst, das dehnbarer als Borstahl ist.

2. Verfahren nach einem der vorstehend aufgeführten Ansprüche, **dadurch gekennzeichnet, dass** die Fahrzeugverstärkung eine der folgenden Verstärkungen bildet: eine Fahrzeugsäulenverstärkung, beispielsweise eine A-Säulen-Verstärkung (12), eine B-Säulen-Verstärkung (14) oder eine C-Säulen-Verstärkung (16), eine Dachreling (18) oder ein Schwellerelement (20).

3. Verfahren nach Anspruch 2, **dadurch gekennzeichnet, dass** der erste Abschnitt (24) ein Oberteil einer Fahrzeugsäulenverstärkung (12, 14, 16) und der zweite Abschnitt (26) ein Unterteil einer Fahrzeugsäulenverstärkung (12, 14, 16) ist.

4. Verfahren nach Anspruch 2, **dadurch gekennzeichnet, dass** mindestens eine gehärtete Zone so angeordnet ist, dass sie sich, wenn sie in einem Fahrzeug (10) montiert ist, im Wesentlichen in der oberen Hälfte, im oberen Drittel oder im oberen Viertel der Fahrzeugsäulenverstärkung (12, 14, 16) befindet.

5. Verfahren nach einem der vorstehend aufgeführten Ansprüche, **dadurch gekennzeichnet, dass** der erste Abschnitt (24) und/oder der zweite Abschnitt (26) einen maßgeschneiderten gewalzten Zuschnitt (TRB) umfasst.

6. Verfahren nach einem der vorstehend aufgeführten Ansprüche, **dadurch gekennzeichnet, dass** der zweite Abschnitt (26) einen maßgeschneiderten geschweißten Zuschnitt (TWB) umfasst.

7. Verfahren nach einem der vorstehend aufgeführten Ansprüche, **dadurch gekennzeichnet, dass** das Verbinden in Schritt a) das Verbinden des ersten Abschnitts (24) mit dem zweiten Abschnitt (26) umfasst.

8. Verfahren nach einem der vorstehend aufgeführten Ansprüche, **dadurch gekennzeichnet, dass** der erste Abschnitt (24) eine uneinheitliche Dicke aufweist.

9. Fahrzeugverstärkung (12, 14, 16, 18, 20) mit einem ersten Abschnitt (24) und einem zweiten Abschnitt (26), bei der der erste Abschnitt (24) Borstahl und der zweite Abschnitt (26) ein dehnbareres Material als Borstahl umfasst, wobei der erste Abschnitt (24) und der zweite Abschnitt (26) miteinander verbunden sind, **dadurch gekennzeichnet, dass** mindestens ein Teil des ersten Abschnitts (24) nach dem Verbinden mit dem zweiten Abschnitt (26) wärmebehandelt wird, so dass die Fahrzeugverstärkung (12, 14, 16, 18, 20) mindestens eine gehärtete Zone Borstahl und ein oder mehrere wärmeunbehandelte Teile Borstahl im ersten Abschnitt (24) sowie mindestens eine weiche Zone aus Material umfasst, das dehnbarer als Borstahl ist.

10. Fahrzeugverstärkung (12, 14, 16, 18, 20) nach Anspruch 9, **dadurch gekennzeichnet, dass** die Fahrzeugverstärkung eine der folgenden Verstärkungen bildet: eine Fahrzeugsäulenverstärkung, beispielsweise eine A-Säulen-Verstärkung (12), eine B-Säulen-Verstärkung (14) oder eine C-Säulen-Verstärkung (16), eine Dachreling (18) oder ein Schwellerelement (20).

11. Fahrzeugverstärkung (12, 14, 16, 18, 20) nach Anspruch 10, **dadurch gekennzeichnet, dass** der erste Abschnitt (24) ein Oberteil einer Fahrzeugsäulenverstärkung (12, 14, 16) und der zweite Abschnitt (26) ein Unterteil einer Fahrzeugsäulenverstärkung (12, 14, 16) ist.

12. Fahrzeugverstärkung (12, 14, 16, 18, 20) nach Anspruch 11, **dadurch gekennzeichnet, dass** mindestens eine gehärtete Zone so angeordnet ist, dass sie sich, wenn sie in einem Fahrzeug (10) montiert ist, im Wesentlichen in der oberen Hälfte, im oberen Drittel oder im oberen Viertel der Fahrzeugsäulenverstärkung (12, 14, 16) befindet.

13. Fahrzeugverstärkung (12, 14, 16, 18, 20) nach einem der Ansprüche 9 bis 12, **dadurch gekennzeichnet, dass** der erste Abschnitt (24) und/oder der zweite Abschnitt (26) einen maßgeschneiderten gewalzten Zuschnitt (TRB) umfasst.

14. Fahrzeugverstärkung (12, 14, 16, 18, 20) nach einem der Ansprüche 9 bis 13, **dadurch gekennzeichnet, dass** der zweite Abschnitt (26) einen maßgeschneiderten geschweißten Zuschnitt (TWB) umfasst.

15. Fahrzeugverstärkung (12, 14, 16, 18, 20) nach einem der Ansprüche 9 bis 14, **dadurch gekennzeichnet, dass** der erste Abschnitt (24) mit dem zweiten Abschnitt (26) verschweißt ist.

16. Fahrzeugverstärkung (12, 14, 16, 18, 20) nach einem der Ansprüche 9 bis 15, **dadurch gekennzeichnet, dass** der erste Abschnitt (24) eine uneinheitliche Dicke aufweist.

17. Fahrzeug (10), das mindestens eine Fahrzeugverstärkung (12, 14, 16, 18, 20) nach einem der Ansprüche 9 bis 15 umfasst.

## Revendications

1. Procédé de fabrication d'un renfort (12, 14, 16, 18, 20) de véhicule, qui comprend l'étape consistant à a) assembler une première partie (24) comprenant de l'acier au bore à une seconde partie (26) comprenant un matériau plus ductile que l'acier au bore pour constituer un renfort (12, 14, 16, 18, 20) de véhicule, **caractérisé en ce qu'**il comprend l'étape consistant à b) traiter thermiquement au moins une partie de ladite première partie (24) après ledit assemblage de façon à ce que ledit renfort (12, 14, 16, 18, 20) de véhicule comprenne au moins une zone durcie d'acier au bore et une ou plusieurs parties non traitées thermiquement d'acier au bore dans ladite première partie (24), et au moins une zone tendre d'un matériau plus ductile que l'acier au bore.

2. Procédé selon l'une quelconque des revendications précédentes, **caractérisé en ce que** ledit renfort de véhicule est un composant parmi : un renfort de montant de véhicule, tel qu'un renfort (12) de pied avant, un renfort (14) de pied milieu ou un renfort (16) de pied arrière, un brancard (18) de pavillon, un élément de bas de caisse (20).

3. Procédé selon la revendication 2, **caractérisé en ce que** ladite première partie (24) est une pièce supérieure d'un renfort (12, 14, 16) de montant de véhicule et ladite seconde partie (26) est une pièce inférieure d'un renfort (12, 14, 16) de montant de véhicule.

4. Procédé selon la revendication 2, **caractérisé en ce que** ladite zone durcie est disposée pour être située sensiblement dans la moitié supérieure, le tiers supérieur ou le quart supérieur du renfort (12, 14, 16) de montant de véhicule quand il est monté dans un véhicule (10).

5. Procédé selon l'une quelconque des revendications précédentes, **caractérisé en ce que** ladite première partie (24) et/ou ladite seconde partie (26) comprend un flan laminé sur mesure (TRB).

6. Procédé selon l'une quelconque des revendications précédentes, **caractérisé en ce que** ladite seconde partie (26) comprend un flan soudé sur mesure (TWB).

7. Procédé selon l'une quelconque des revendications précédentes, **caractérisé en ce que** ledit assemblage à l'étape a) comprend l'assemblage de ladite première partie (24) à ladite seconde partie (26).

8. Procédé selon l'une quelconque des revendications précédentes, **caractérisé en ce que** ladite première partie (24) a une épaisseur non uniforme.

9. Renfort (12, 14, 16, 18, 20) de véhicule comportant une première partie (24) et une seconde partie (26), dans lequel ladite première partie (24) comprend de l'acier au bore et ladite seconde partie (26) comprend un matériau plus ductile que l'acier au bore, dans lequel ladite première partie (24) et ladite seconde partie (26) sont raccordées par une soudure, **caractérisé en ce qu'**au moins une part de ladite première partie (24) a été traitée thermiquement après avoir été assemblée à ladite seconde partie (26) de façon à ce que ledit renfort (12, 14, 16, 18, 20) de véhicule comprenne au moins une zone durcie d'acier au bore et une ou plusieurs parties non traitées thermiquement d'acier au bore dans ladite première partie (24), et au moins une zone tendre d'un matériau plus ductile que l'acier au bore.

10. Renfort (12, 14, 16, 18, 20) de véhicule selon la revendication 9, **caractérisé en ce que** ledit renfort de véhicule est un composant parmi : un renfort de montant de véhicule, tel qu'un renfort (12) de pied avant, un renfort (14) de pied milieu ou un renfort (16) de pied arrière, un brancard (18) de pavillon, un élément de bas de caisse (20).

11. Renfort (12, 14, 16, 18, 20) de véhicule selon la revendication 10, **caractérisé en ce que** ladite première partie (24) est une pièce supérieure d'un renfort (12, 14, 16) de montant de véhicule et ladite seconde partie (26) est une pièce inférieure d'un renfort (12, 14, 16) de montant de véhicule.

12. Renfort (12, 14, 16, 18, 20) de véhicule selon la revendication 11, **caractérisé en ce que** ladite zone durcie est disposée pour être située sensiblement dans la moitié supérieure, le tiers supérieur ou le quart supérieur du renfort (12, 14, 16) de montant de véhicule quand il est monté dans un véhicule (10).

13. Renfort (12, 14, 16, 18, 20) de véhicule selon l'une quelconque des revendications 9 à 12, **caractérisé en ce que** ladite première partie (24) et/ou ladite seconde partie (26) comprend un flan laminé sur mesure (TRB).

14. Renfort (12, 14, 16, 18, 20) de véhicule selon l'une quelconque des revendications 9 à 13, **caractérisé en ce que** ladite seconde partie (26) comprend un flan soudé sur mesure (TWB).

15. Renfort (12, 14, 16, 18, 20) de véhicule selon l'une quelconque des revendications 9 à 14, **caractérisé en ce que** ladite première partie (24) est soudée à ladite seconde partie (26).

16. Renfort (12, 14, 16, 18, 20) de véhicule selon l'une quelconque des revendications 9 à 15, **caractérisé en ce que** ladite première partie (24) a une épaisseur non uniforme.

17. Véhicule (10) comprenant au moins un renfort (12, 14, 16, 18, 20) de véhicule selon l'une quelconque des revendications 9 à 15.
